# FASCICULE DE BREVET EUROPEEN

(11) **EP 4 054 817 B1**
(45) Date de publication et mention de la délivrance du brevet: **06.08.2025**
(21) Numéro de dépôt: 20817462.3
(22) Date de dépôt: 05.11.2020
(51) Int. Cl.: B29B 15/12

(54) **PROCÉDÉ D'IMPRÉGNATION D'UN MATÉRIAU FIBREUX AVEC UN SYSTÈME OPTIMISÉ DE RÉALIMENTATION ET DE NETTOYAGE DES PARTICULES FINES**
VERFAHREN ZUM IMPRÄGNIEREN EINES FASERMATERIALS MIT EINEM OPTIMIERTEN SYSTEM ZUR NACHFÜLLUNG UND REINIGUNG FEINER PARTIKEL
METHOD FOR IMPREGNATING A FIBROUS MATERIAL WITH AN OPTIMISED SYSTEM FOR RESUPPLYING AND CLEANING FINE PARTICLES

(30) Priorité: 06.11.2019 FR 1912421
(43) Date de publication de la demande: 14.09.2022
(73) Titulaire: ARKEMA FRANCE, 92800 Puteaux (FR)
(72) Inventeur: SAVART, Thibaut, 64170 LACQ (FR); BABEAU, Arthur, Pierre, 64170 LACQ (FR); SALINIER, Axel, 64170 LACQ (FR); HUZE, Denis, 27470 SERQUIGNY (FR)
(74) Mandataire: Arkema Patent
(86) Numéro de dépôt international: PCT/FR2020/051998
(87) Numéro de publication internationale: WO 2021/089943

(56) Documents cités:
- EP-A1- 0 246 167
- WO-A1-2018/234436
- FR-A1- 2 659 595
- US-A- 3 919 437
- MILLER A ET AL: "IMPREGNATION TECHNIQUES FOR THERMOPLASTIC MATRIX COMPOSITES", POLYMERS AND POLYMER COMPOSITES, RAPRA TECHNOLOGY, GB, vol. 4, no. 7, 1 January 1996 (1996-01-01), pages 459 - 481, XP000658227, ISSN: 0967-3911

## Description

La présente invention concerne un procédé de fabrication d'un matériau fibreux imprégné comprenant au moins un matériau fibreux en fibres continues et au moins une matrice polymère thermoplastique et comprenant une étape de pré-imprégnation dudit matériau fibreux par une matrice polymère thermoplastique se présentant sous forme de poudre dans un lit fluidisé, le niveau h de la poudre et la masse m de la poudre présents dans la cuve (20) étant maintenus sensiblement constant dans la cuve (20) durant la mise en œuvre de l'étape de pré-imprégnation.

En d'autre termes, ledit niveau h de la poudre est compris de hᵢ à hᵢ - 3% , en particulier hᵢ - 2%, durant la mise en œuvre de l'étape de pré-imprégnation, hᵢ étant le niveau initial de la poudre dans ladite cuve (20) au démarrage de la mise en œuvre de l'étape de pré-imprégnation, ladite masse m étant comprise de mᵢ à mᵢ ± 0,5% durant la mise en œuvre de l'étape de pré-imprégnation, mᵢ étant la masse initiale de la poudre dans ladite cuve (20) au démarrage de la mise en œuvre de l'étape de pré-imprégnation.

Dans la présente description, on entend par « matériau fibreux » un assemblage de fibres de renfort. Avant sa mise en forme, il se présente sous forme de mèches. Après sa mise en forme, il se présente sous forme de rubans (ou tapes), de bandes, ou de nappes. Leur assemblage constitue un renfort unidirectionnel ou un tissu ou un non tissé (NCF).

Dans la présente description, on utilise le terme « bande » pour désigner des bandes de matériau fibreux dont la largeur est supérieure ou égale à 400mm. On utilise le terme « ruban » pour désigner des rubans de largeur calibrée et inférieure ou égale à 400mm.

La qualité d'imprégnation de polymères thermoplastiques, en particulier de viscosité importante, sur des fibres de renforts pour en faire des tapes pré-imprégnés thermoplastiques passe par une parfaite maitrise de la quantité de polymère imprégné et de la qualité de répartition de ce polymère au sein de la mèche de fibres de renfort au cours du procédé d'imprégnation. De nombreux brevets ou demandes de brevets, par exemple WO2018/229114, WO 2018/234436, WO 2018/234439 et EP 2788408, décrivent que l'épanouissement des fibres est un paramètre essentiel pour obtenir une qualité homogène d'imprégnation de polymère au sein des fibres sur le tape final.

De manière générale l'épanouissement de fibres de renfort, comme les fibres de carbone, est généré via des systèmes mécaniques, pneumatiques et/ou vibratoires. Le principal inconvénient de ces méthodes est de générer du désalignement de fibres au sein d'une mèche (épanouissement par soufflerie ou aspiration) et/ou une dégradation mécanique des fibres par application d'une contrainte transverse trop élevée.

La génération d'un épanouissement, avec quelque système que ce soit, peut générer de la casse de fibres ou tout du moins une détérioration partielle de ces fibres. On forme alors une sorte de duvet de fibres dénommé « fuzz ». Ce fuzz, généralement constitué de plusieurs morceaux de fibres accumulés se génère principalement aux points de contacts entre la fibre et un élément de la ligne d'imprégnation (doigts de guidage, rouleaux supports etc...). Plus les contraintes mécaniques appliquées sont grandes plus le fuzz a tendance à se créer. On observe alors au cours du temps du fuzz qui se crée et finit par s'accumuler en particulier dans le bain de pré-imprégnation. Dans un bain de pré-imprégnation de type lit fluidisé, le fuzz dégrade la qualité de fluidisation localement et la qualité du lit fluidisé décroit continuellement. De ce fait, le niveau du lit fluidisé diminue et la concentration locale de particules de poudres change. On observe alors un bain inhomogène de poudre ne permettant plus d'imprégner de bonne manière et constamment au cours du procédé. Le taux de poudre capté par la mèche de fibres, et donc le taux de polymère imprégné dans le tape, a tendance à décroitre au cours du temps.

On observe également un mottage des particules de poudre qui peut apparaître dans les angles morts et qui ne viennent pas de l'accumulation du fuzz. Il est bien connu de l'homme de l'art que toutes les poudres finissent par se tasser dans les angles notamment des cuves par perte de vitesse des poudres au contact des parois de cuve, provoquant des mottages. En outre, à force de contacts entre elles et du fait de leur géométrie qui n'est généralement pas parfaitement sphérique, les poudres finissent aussi par s'agglomérer et donc se tasser. Ceci a pour conséquence d'impacter globalement la hauteur du niveau de la poudre dans la cuve et donc de la réduire.

Le document FR2659595 décrit un procédé d'imprégnation de fibres au moyen d'un aérosol alimenté en poudre par un lit fluidisé comprenant un système de réintroduction des particules préalablement introduites mais non imprégnées, les particules de poudre étant chargées volontairement électrostatiquement.

Le document EP0246167 décrit un procédé d'imprégnation de fibres au moyen d'un aérosol avec maintien volumique ou pondéral de polymère emporté et de fibres à la valeur préalablement choisie.

Le document WO2018/234436 décrit un procédé électrostatique d'imprégnation de fibres. Le document US 3 919 437 A décrit un procédé d'imprégnation électrostatique en charge volontaire.

Les granulométries utilisées dans les procédés de pré-imprégnation en lit fluidisé de poudres sont généralement centrées sur 100-200µm, avec une déviation relativement importante (D10 et D90 éloignées de D50) (voir notamment les références WO2018115737A1 & WO2018115738A1). Cette dispersion est nécessaire pour obtenir une fluidisation homogène et stable, ainsi qu'une qualité de pré-imprégnation optimisée. Du fait de la grande disparité de taille entre les plus petites particules (quelques µm de diamètre ou particules fines) et les plus grosses (jusqu'à 500-600µm par exemple), on observe un envol des particules fines (plus de 99% en volume des poudres envolées ont une taille comprise entre 0,01 µm et 60 µm) en dehors de la cuve (20) de fluidisation. L'envol de ces particules fines induit plusieurs problèmes majeurs :

Appauvrissement du lit fluidisé en particules fines, pouvant induire une modification de la qualité de pré-imprégnation de la mèche de fibre et la stabilité du bain de fluidisation ainsi que son niveau,

Perte importante de matière donc baisse de la rentabilité du procédé de fabrication. Il serait préférable de pouvoir les capter et les valoriser,

Problématiques QHSE (Qualité, hygiène, sécurité et environnement) générées par l'envol de particules fines (<10µm) pour les opérateurs et le matériel.

De même, en cours de production, il est nécessaire de réalimenter la cuve (20) de pré-imprégnation avec une « solution mère » de composition équivalente à celle introduite initialement dans le bain de pré-imprégnation. Dans un système de lit fluidisé, il est donc nécessaire de conserver non seulement une hauteur de poudre constante mais aussi une masse de poudre constante dans la cuve (20) de fluidisation pour obtenir un produit bien imprégné et constant en taux de polymère. La réalimentation de la poudre se fait généralement manuellement et périodiquement, induisant des variations faibles mais bien présentes de compositions du bain au cours du temps de production. Le document MILLER A ET AL: "IMPREGNATION TECHNIQUES FOR THERMOPLASTIC MATRIX COMPOSITES",POLYMERS AND POLYMER COMPOSITES, RAPRA TECHNOLOGY, GB, vol. 4, no. 7, 1 janvier 1996 (1996-01-01), pages 459-481, ISSN: 0967-3911 divulgue en figure 13 une cuve comprenant un lit fluidisé permettant le passage d'un matériau fibreux en fibres continues. La cuve dudit document divulgue, par ailleurs, un système de recirculation de la poudre.

Il est donc nécessaire de remédier aux différents problèmes énumérés ci-dessus.

La présente invention concerne donc un procédé de fabrication d'un matériau fibreux imprégné comprenant au moins un matériau fibreux en fibres continues et au moins une matrice polymère thermoplastique et comprenant une étape de pré-imprégnation dudit matériau fibreux par une matrice polymère thermoplastique se présentant sous forme de poudre, caractérisé en ce que ladite étape de pré-imprégnation est effectuée par voie sèche dans une cuve (20) comprenant un lit fluidisé (22), ladite étape de pré-imprégnation étant effectuée avec un maintien sensiblement constant du niveau h de la poudre et de la masse m de la poudre présente dans la cuve (20), ledit niveau h étant compris de hᵢ à hᵢ - 3% , en particulier hᵢ - 2%, durant la mise en œuvre de l'étape de pré-imprégnation, hᵢ étant le niveau initial de la poudre dans ladite cuve (20) au démarrage de la mise en œuvre de l'étape de pré-imprégnation, ladite masse m étant comprise de mᵢ à mᵢ ± 0,5% durant la mise en œuvre de l'étape de pré-imprégnation, mᵢ étant la masse initiale de la poudre dans ladite cuve (20) au démarrage de la mise en œuvre de l'étape de pré-imprégnation.

L'étape de pré-imprégnation est effectuée avec un maintien sensiblement constant du niveau h de la poudre et de la masse m, ce qui est essentiel dans le procédé de l'invention. En effet, lors du démarrage de l'étape de pré-imprégnation, lorsque la fluidisation est mise en route, il existe une hauteur initiale hᵢ ou un niveau initial de poudre en fluidisation dans la cuve (20) ainsi qu'une masse initiale mᵢ de poudre dans la cuve (20).

Durant la mise en œuvre de l'étape de pré-imprégnation, aussi bien le niveau de la poudre que la masse de poudre présents dans la cuve (20) doivent être maintenus sensiblement constants, c'est-à-dire qu'en permanence dans cuve (20) durant la mise en œuvre de l'étape de pré-imprégnation, ledit niveau h doit être maintenu sensiblement constant, en d'autres termes, le niveau h doit être compris de hᵢ à hᵢ - 3% , en particulier hᵢ - 2%, hᵢ étant le niveau initial de la poudre dans ladite cuve (20) au démarrage de la mise en œuvre de l'étape de pré-imprégnation, et la masse m de poudre doit être maintenue sensiblement constante, en d'autres termes, ladite masse m doit être comprise de mᵢ à mᵢ ± 0,5% durant la mise en œuvre de l'étape de pré-imprégnation, mᵢ étant la masse initiale de la poudre dans ladite cuve (20) au démarrage de la mise en œuvre de l'étape de pré-imprégnation.

Le niveau initial de la poudre hᵢ peut être mesuré selon diverses techniques bien connues de l'homme du métier utilisant des lits fluidisés de poudres.

Par exemple, il peut être mesuré au moyen d'un capteur, en particulier un capteur membranaire de position, ou par mesure ultrasonique de position par exemple commercialisé par la société Flowline Inc. (USA) ou encore par mesure laser du niveau du lit fluidisé dans la cuve tel qu'un capteur laser de déplacement commercialisé par la société Keyence (France) ou par des appareils de mesure de niveau continue et de détection de niveau commercialisés par Endress et Hauser (France).

Le cas échéant, une moyenne de mesures dans les zones réellement utilisées pour effectuer la préimprégnation des fibres dans le lit fluide peut être effectuée.

Selon FR2659595 et EP0246167, un lit fluidisé présente une surface horizontale comme un liquide dans un récipient.

Le niveau initial de la poudre dans la longueur et la largeur du lit fluidisé peut donc être aisément mesuré.

Avantageusement, la surface du lit fluidisé utilisé dans l'invention est horizontale, notamment comme un liquide dans un récipient.

Avantageusement, la hauteur du lit fluidisé dans toute la largeur et la longueur de la cuve est constante.

L'obtention d'une masse de poudre dans le lit fluidisé constante pour maintenir une qualité de pré-imprégnation constante au cours du temps peut être effectuée en utilisant un système automatique de réalimentation en poudre de la cuve basé sur des doseurs gravimétriques reliés à une balance sur laquelle repose la cuve de fluidisation et à un capteur de niveau de lit fluidisé. Ces doseurs alimentent en continu la cuve de fluidisation dans une zone non utile de la cuve pour ne pas perturber le procédé.

Avantageusement, le niveau h doit être compris de hᵢ à hᵢ - 2%, et la masse m doit être comprise de mᵢ à mᵢ ± 0,5% durant la mise en œuvre de l'étape de pré-imprégnation.

Selon l'invention, le diamètre moyen D50 en volume des particules de poudre de polymère thermoplastique est compris de 30 à 300 µm, notamment de 50 à 200 µm, plus particulièrement de 70 à 200µm.

Les diamètres en volume des particules de poudre de polymère thermoplastique (D10, D50 et D90) sont définis selon la norme ISO 9276 :2014.

La « D50 » correspond au diamètre moyen en volume, c'est à dire la valeur de la taille de particule qui divise la population de particules examinée exactement en deux.

La « D90 » correspond à la valeur à 90% de la courbe cumulée de la distribution granulométrique en volume.

La « D10 » correspond à la taille de 10% du volume des particules.

Dans un mode de réalisation, la cuve (20) est réalimenté par la matrice polymère thermoplastique se présentant sous forme de poudre pour compenser la consommation de ladite matrice polymère thermoplastique par la pré-imprégnation dudit matériau fibreux.

Dans un mode de réalisation, la granulométrie de ladite poudre est sensiblement constante dans ladite cuve (20), c'est-à-dire que la D50 varie au maximum de + 20%.

Dans un autre mode de réalisation, la granulométrie des particules fines de ladite poudre est sensiblement constante dans ladite cuve (20), c'est-à-dire que la D10 varie au maximum de + 30%.

Dans encore un autre mode de réalisation, la granulométrie des grosses particules de ladite poudre est sensiblement constante dans ladite cuve (20), c'est-à-dire que la D90 varie au maximum de + 10%.

Avantageusement, la granulométrie de ladite poudre est sensiblement constante dans ladite cuve (20), c'est-à-dire que la D50 varie au maximum de + 20% et la granulométrie des particules fines de ladite poudre est sensiblement constante dans ladite cuve (20), c'est-à-dire que la D10 varie au maximum de + 30%.

Avantageusement, la granulométrie de ladite poudre est sensiblement constante dans ladite cuve (20), c'est-à-dire que la D50 varie au maximum de + 20% et la granulométrie des grosses particules de ladite poudre est sensiblement constante dans ladite cuve (20), c'est-à-dire que la D90 varie au maximum de + 10%.

Avantageusement, la granulométrie des grosses particules de ladite poudre est sensiblement constante dans ladite cuve (20), c'est-à-dire que la D90 varie au maximum de + 10% et la granulométrie des particules fines de ladite poudre est sensiblement constante dans ladite cuve (20), c'est-à-dire que la D10 varie au maximum de + 30%.

Avantageusement, la granulométrie de ladite poudre est sensiblement constante dans ladite cuve (20), c'est-à-dire que la D50 varie au maximum de + 20% et la granulométrie des particules fines de ladite poudre est sensiblement constante dans ladite cuve (20), c'est-à-dire que la D10 varie au maximum de + 30% la granulométrie des grosses particules de ladite poudre est sensiblement constante dans ladite cuve (20), c'est-à-dire que la D90 varie au maximum de + 10%.

Lorsque le matériau fibreux pénètre dans le lit fluidisé, la poudre de la matrice polymère thermoplastique présente dans la cuve (20) initialement se dépose sur le matériau fibreux et est donc consommée durant la pré-imprégnation, ce qui provoque la baisse du niveau de poudre dans la cuve (20) ainsi qu'une baisse de la masse de poudre présente dans la cuve (20). Il faut donc compenser le niveau et la masse présents dans la cuve (20) par introduction de « composition mère », c'est-à-dire de matrice polymère thermoplastique initiale sous forme de poudre, c'est-à-dire présentant les mêmes caractéristiques de D10, D50 et D90.

Cependant, avec la fluidisation, des particules fines présentes initialement dans la « composition mère » sortent du lit fluidisé ainsi que de la cuve (20), faisant ainsi varier la D50, D10 et D90 de la « composition mère » quand bien même le niveau et la masse présents dans la cuve (20) sont compensés par introduction de « composition mère » dans la cuve (20).

La D50 et/ou la D90 et/ou la D10 doivent donc être maintenus constants.

Dans un mode de réalisation, ladite cuve (20) comprend un lit fluidisé (22) et ladite étape de pré-imprégnation est effectuée avec épanouissement simultané de ladite mèche (81a) ou desdites mèches entre l'entrée et la sortie dudit lit fluidisé (22).

Le terme « épanouissement » désigne le facteur d'augmentation de la largeur du matériau fibreux (ou mèche) par rapport à la largeur I initiale de ladite mèche, c'est-à-dire lorsque ladite mèche pénètre dans le système assurant l'étape de pré-imprégnation. Il est bien évident qu'il s'agit d'une largeur moyenne (qu'il s'agisse de la largeur initiale ou de la largeur après épanouissement) de la mèche, à plat, déterminée en moyennant des mesures obtenues sans contact (LASER, LED etc...) sur plusieurs bobines. La largeur initiale ne correspond pas obligatoirement à la largeur de la mèche à la sortie des dévidoirs d'alimentation en matériau fibreux.

Dans un mode de réalisation, ladite cuve (20) est équipée d'un racloir.

Comme indiqué plus haut, la génération d'un épanouissement, avec quelque système que ce soit, génère de la casse de filaments de fibres : on forme alors du « fuzz » qui s'accumulation au cours du temps en particulier dans le bain de pré-imprégnation dégradant la qualité de fluidisation localement. La qualité du lit fluidisé décroit continuellement.

Par ailleurs, un mottage des particules de poudre elles-mêmes se produit, en particulier dans les zones mortes du lit fluidisé. En raison aussi bien du fuzz que du mottage « naturel » des poudres, le niveau du lit fluidisé diminue globalement et la concentration locale de particules de poudres change. Par conséquent, un racloir est nécessaire pour casser les blocs de poudre accumulés et remettre ainsi en suspension les particules de poudre.

Dans un mode de réalisation, ledit racloir est mis en œuvre automatiquement lorsque le niveau h < hᵢ - 3%, en particulier h < hᵢ - 2%.

Afin d'obtenir un niveau de lit fluidisé sensiblement constant pour maintenir une qualité de pré-imprégnation sensiblement constante au cours du temps, un système de racloir est activé automatiquement et périodiquement lorsque le seuil du lit fluidisé passe sous un niveau critique. Ce racloir a pour but d'évacuer le fuzz dans une zone inutilisée de la cuve de fluidisation mais aussi de démotter la poudre accumulée dans des zones peu turbulentes de la cuve (phénomène de mottage bien connu de l'homme de l'art en fluidisation). Il peut se présenter sous plusieurs formes physiques: des morceaux de fibres indépendantes de quelques mm ou cm de longueur, une fibre continue enroulée sur elle-même formant ainsi une petite pelote, des amas de fibres continues et courtes format une masse en suspension, des amas de poudre agglomérée etc....

Dans un mode de réalisation, ladite cuve (20) est équipée d'un système transverse d'aspiration qui aspire les particules fines présentant un diamètre compris de 0,01 à 60 µm qui sortent de ladite cuve (20) lors de la fluidisation.

Avantageusement, 99% des particules fines qui sortent de ladite cuve (20) lors de la fluidisation présentent un diamètre compris de 0,01 à 60 µm.

Le diamètre des particules qui sortent de ladite cuve peut être mesuré par des techniques conventionnelles connues de l'homme du métier (par exemple, mesure par granulométrie LASER des poudres envolées et récoltées puis analysées sur plusieurs productions).

Dans un autre mode de réalisation, ladite cuve (20) est équipée d'un système transverse d'aspiration qui aspire les particules fines présentant une D50 comprise de 0,01 à 60 µm qui sortent de ladite cuve (20) lors de la fluidisation.

Avantageusement lesdites particules aspirées sont réintroduites en continu dans ladite cuve (20).

Outre la consommation naturelle de poudre par l'étape de pré-imprégnation, la formation de fuzz, et la formation d'amas de poudre agglomérée, des particules fines de la « composition mère » s'envolent au-dessus de la cuve de fluidisation et vont donc provoquer une modification de la D50, D10 et D90 de la « composition mère » et ce, malgré l'introduction de « composition mère », ce qui va perturber la qualité, l'homogénéité et la quantité de pré-imprégnation du matériau fibreux ainsi que diminuer le niveau du lit fluidisé.

Les particules fines sont constituées de particules présentant un diamètre compris de 0,01 à 60 µm.

Les particules de diamètre inférieur à 0,01 µm n'existent pas initialement dans le système.

Les particules de diamètre supérieur à 60 µm ne s'envolent pas généralement au-dessus de la cuve.

Il est donc nécessaire de récupérer les particules fines présentant un diamètre compris de 0,01 à 60 µm qui sortent de ladite cuve (20) lors de la fluidisation qui vont alors être réintroduites dans la cuve.

Avantageusement, le système transverse d'aspiration est équipé d'une grille de sélection pour empêcher que des particules de plus de 60µm soient aspirées et réintroduites dans la cuve.

La « composition mère » de poudre ajoutée dans la cuve peut également contenir une partie des particules récupérées par le système d'aspiration/récupération en fonction de leur granulométrie.

Avantageusement, ladite cuve (20) est équipée d'un racloir et d'un système transverse d'aspiration qui aspire les particules fines présentant un diamètre compris de 0,01 à 60 µm qui sortent ladite cuve (20).

Avantageusement, 99% des particules fines qui sortent de ladite cuve (20) lors de la fluidisation présentent un diamètre compris de 0,01 à 60 µm.

Avantageusement, ladite cuve (20) est équipée d'un racloir et d'un système transverse d'aspiration qui aspire les particules fines présentant une D50 comprise de 0,01 à 60 µm qui sortent ladite cuve (20).

### S'agissant de l'étape de pré-imprégnation

Un exemple d'unité de mise en œuvre du procédé de fabrication est décrit dans la demande internationale WO 2015/121583 et est représenté figure 1, à l'exception de la cuve (autrement appelée cuve de pré-imprégnation qui dans le cas de l'invention comprend un lit fluidisé muni d'une pièce d'embarrage qui peut être un rouleau de compression).

L'étape de pré-imprégnation et les embarrages peuvent être tels que décrits dans WO 2018/115737.

Le rouleau de compression peut être fixe ou rotatif.

L'étape de pré-imprégnation du matériau fibreux est réalisée par passage d'une ou plusieurs mèches dans un dispositif de pré-imprégnation en continu, comprenant une cuve (20), comprenant en particulier un lit fluidisé (22) de poudre polymère.

La poudre de polymère(s) ou polymère est mise en suspension dans un gaz G (de l'air par exemple) introduit dans la cuve et circulant dans la cuve à travers une trémie 21. La ou les mèches sont mises en circulation dans ce lit fluidisé 22.

La cuve peut avoir toute forme, notamment cylindrique ou parallélépipédique, en particulier un parallélépipède rectangle ou un cube, avantageusement un parallélépipède rectangle.

La cuve peut être une cuve ouverte ou fermée. Avantageusement, elle est ouverte.

Dans le cas où la cuve est fermée, elle est alors équipée d'un système d'étanchéité pour que la poudre polymère ne puisse pas sortir de ladite cuve.

Cette étape de pré-imprégnation est donc effectuée par voie sèche, c'est à dire que la matrice polymère thermoplastique est sous forme de poudre, notamment en suspension dans un gaz, en particulier de l'air, mais ne peut pas être en dispersion dans un solvant ou dans l'eau.

Chaque mèche à pré-imprégner est déroulée d'un dispositif (10) à dévidoirs (11) sous la traction engendrée par des cylindres (non représentés). De préférence, le dispositif (10) comprend une pluralité de dévidoirs (11), chaque dévidoir permettant de dérouler une mèche à imprégner. Ainsi, il est possible de pré-imprégner plusieurs mèches de fibres simultanément. Chaque dévidoir (11) est pourvu d'un frein (non représenté) de manière à appliquer une tension sur chaque mèche de fibres. Dans ce cas, un module d'alignement (12) permet de disposer les mèches de fibres parallèlement les unes par rapport aux autres. De cette manière les mèches de fibres ne peuvent pas être en contact les unes avec les autres, ce qui permet d'éviter une dégradation mécanique des fibres par frottement entre elles.

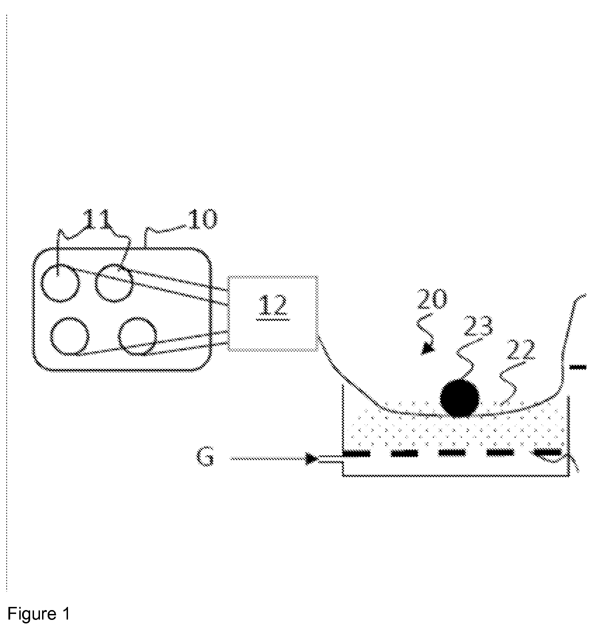

La mèche de fibres ou les mèches de fibres parallèles passent alors dans une cuve (20), comprenant en particulier un lit fluidisé (22), munie d'une pièce d'embarrage qui est un rouleau de compression (23) dans le cas de la figure 1. La mèche de fibres ou les mèches de fibres parallèles ressort(ent) ensuite de la cuve après imprégnation après contrôle du temps de séjour dans la poudre.

Le contrôle du temps de séjour dans la poudre permet de pré-imprégner le matériau fibreux par la matrice polymère thermoplastique, avec un taux de résine bien contrôlé et de manière homogène.

L'utilisation d'au moins un embarrage améliore l'imprégnation par rapport aux procédés de l'art antérieur, en particulier, l'imprégnation est à cœur.

Par pièce d'embarrage, il faut entendre tout système sur lequel la mèche à la possibilité de défiler dans la cuve. La pièce d'embarrage peut avoir n'importe quelle forme à partir du moment où la mèche peut défiler dessus.

Cette imprégnation est réalisée afin de permettre à la poudre polymère de pénétrer au cœur de la mèche de fibre et d'adhérer aux fibres suffisamment pour supporter le transport de la mèche poudrée hors de la cuve. La ou les mèches pré-imprégnées par la poudre, est (sont) dirigée(s) ensuite vers un dispositif de calandrage chauffant, avec possibilité de préchauffage avant calandrage et éventuel chauffage post-calandrage.

De manière facultative, cette étape de pré-imprégnation peut être complétée par une étape de recouvrement de la mèche ou des mèches pré-imprégnées, juste en sortie de la cuve (20) de pré-imprégnation par la poudre en lit fluidisé (22), et juste avant l'étape de mise en forme par calandrage. Pour cela, le sas de sortie de la cuve (20) (lit fluidisé 22) peut être connecté à un dispositif de recouvrement (30) pouvant comporter une tête d'équerre de recouvrement, comme cela est également décrit dans le brevet EP0406067. Le polymère de recouvrement peut être identique ou différent de la poudre polymère en lit fluidisé. De préférence, il est de même nature. Un tel recouvrement permet non seulement de compléter l'étape de pré-imprégnation des fibres pour obtenir un taux volumique final de polymère dans la gamme souhaitée et éviter la présence à la surface de la mèche pré-imprégnée, d'un taux de fibres localement trop important, qui nuirait au soudage des tapes lors de la fabrication de la pièce composite, notamment pour l'obtention de matériaux fibreux dits « prêts à l'emploi » de bonne qualité, mais également pour améliorer les performances du matériau composite obtenu.

Le procédé de l'invention comme indiqué ci-dessus est effectué par voie sèche à l'exclusion d'un procédé électrostatique en charge volontaire.

L'expression « en charge volontaire » signifie qu'une différence de potentiel est appliquée entre le matériau fibreux et la poudre. La charge est notamment contrôlée et amplifiée. Les grains de poudres imprègnent alors le matériau fibreux par attraction de la poudre chargée à l'opposé de la fibre. On peut charger électriquement, négativement ou positivement, la poudre par différents moyens (différence de potentiel entre deux électrodes métalliques, frottement mécanique sur parties métalliques etc...) et charger la fibre inversement (positivement ou négativement).

Le procédé de l'invention n'exclut pas la présence de charges électrostatiques qui pourraient apparaitre par frottement du matériau fibreux sur les éléments de l'unité de mise en œuvre avant ou au niveau de la cuve mais qui sont en tout état de cause des charges involontaires.

Avantageusement, le taux de fibres dans ledit matériau fibreux imprégné est compris de 45 à 65 % en volume, de préférence de 50 à 60% en volume, en particulier de 54 à 60% en volume.

En dessous de 45% de fibres, le renfort n'a pas d'intérêt pour ce qui concerne les propriétés mécaniques.

Au-dessus de 65%, les limites du procédé sont atteintes et les propriétés mécaniques sont reperdues.

Si le matériau fibreux, tel que la fibre de verre, présente un ensimage, une étape optionnelle de dé-ensimage peut être effectuée avant le passage du matériau fibreux dans la cuve. Le terme « ensimage » désigne les traitements de surface appliqués aux fibres de renfort en sortie de filière (ensimage textile) et sur les tissus (ensimage plastique).

L'ensimage "textile" appliqué sur les filaments, en sortie de filière consiste à déposer un agent de liaison assurant la cohésion des filaments entre eux, diminuant l'abrasion et facilitant les manipulations ultérieures (tissage, drapage, tricotage) et évitant la formation de charges électrostatiques.

L'ensimage "plastique" ou "finish" appliqué sur les tissus consiste à déposer un agent de pontage dont les rôles sont d'assurer une liaison physico-chimique entre les fibres et la résine et de protéger la fibre de son environnement.

Avantageusement, le taux de fibres dans ledit matériau fibreux imprégné est compris de 50 à 60%, en particulier de 54 à 60% % en volume.

Avantageusement, le temps de séjour dans la poudre est compris de 0,01s à 10s, préférentiellement de 0,1s à 5s, et en particulier de 0,1s à 3s.

Le temps de séjour du matériau fibreux dans la poudre est essentiel à l'imprégnation, notamment à cœur, dudit matériau fibreux.

En deçà de 0,1s, l'imprégnation n'est pas bonne à cœur.

Au-delà de 10s, le taux de matrice polymère imprégnant le matériau fibreux est trop important et les propriétés mécaniques du matériau fibreux pré-imprégné seront mauvaises.

Avantageusement, la cuve utilisée dans le procédé de l'invention comprend un lit fluidisé et ladite étape de pré-imprégnation est effectuée avec épanouissement simultané de ladite mèche ou desdites mèches entre l'entrée et la sortie dudit lit fluidisé.

L'expression « entrée du lit fluidisé » correspond à la tangente verticale du bord de la cuve qui comprend le lit fluidisé.

L'expression « sortie du lit fluidisé » correspond à la tangente verticale de l'autre bord de la cuve qui comprend le lit fluidisé.

En fonction de la géométrie de la cuve, la distance entre l'entrée et la sortie de celle-ci correspond donc au diamètre dans le cas du cylindre, au côté dans le cas d'un cube ou à la largeur ou la longueur dans le cas d'un parallélépipède rectangle. L'épanouissement consiste à singulariser au maximum chaque filament constitutif de ladite mèche des autres filaments qui l'entourent dans son plus proche espace. Il correspond à l'étalement transverse de la mèche.

En d'autres termes, l'étalement transverse ou la largeur de la mèche augmente entre l'entrée du lit fluidisé (ou de la cuve comprenant le lit fluidisé) et la sortie du lit fluidisé (ou de la cuve comprenant le lit fluidisé) et permet ainsi une imprégnation améliorée, notamment à cœur du matériau fibreux.

Le lit fluidisé peut être ouvert ou fermé, en particulier il est ouvert.

Avantageusement, le lit fluidisé comprend au moins une pièce d'embarrage, ladite mèche ou lesdites mèches étant en contact avec une partie ou la totalité de la surface de ladite au moins une pièce d'embarrage.

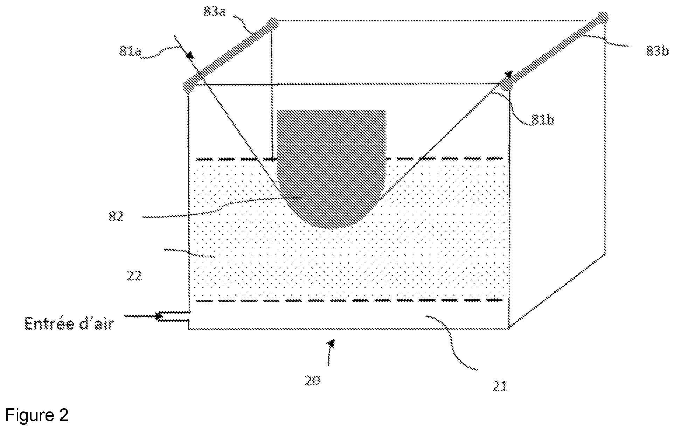

La figure 2 détaille une cuve (20) comprenant un lit fluidisé (22) avec une pièce d'embarrage, réglable en hauteur (82).

La mèche (81a) correspond à la mèche avant imprégnation qui est en contact avec une partie ou la totalité de la surface de ladite au moins une pièce d'embarrage et défile donc partiellement ou totalement à la surface de la pièce d'embarrage (82), ledit système (82) étant immergé dans le lit fluidisé où l'imprégnation s'effectue. Ladite mèche ressort ensuite de la cuve (81b) après contrôle du temps de séjour dans la poudre.

La dite mèche (81a) peut être en contact ou non avec le bord de la cuve (83a) qui peut être un rouleau rotatif ou fixe ou un bord parallélépipédique.

Avantageusement, la dite mèche (81a) est en contact ou non avec le bord de la cuve (83a).

Avantageusement, le bord de la cuve (83b) est un rouleau, notamment cylindrique et rotatif.

La dite mèche (81b) peut être en contact ou non avec le bord de la cuve (83b) qui peut être un rouleau, notamment cylindrique et rotatif ou fixe, ou un bord parallélépipédique.

Avantageusement, la dite mèche (81b) est en contact avec le bord de la cuve (83b).

Avantageusement, le bord de la cuve (83b) est un rouleau, notamment cylindrique et rotatif.

Avantageusement, la dite mèche (81a) est en contact avec le bord de la cuve (83a) et le bord de la cuve (83b) est un rouleau, notamment cylindrique et rotatif et la dite mèche (81b) est en contact avec le bord de la cuve (83b), et le bord de la cuve (83b) est un rouleau, notamment cylindrique et rotatif.

Avantageusement, ladite pièce d'embarrage est perpendiculaire à la direction de ladite mèche ou desdites mèches.

Avantageusement, ledit épanouissement de ladite mèche ou desdites mèches est effectué au moins au niveau de ladite au moins une pièce d'embarrage.

L'épanouissement de la mèche s'effectue donc principalement au niveau de la pièce d'embarrage mais peut également s'effectuer au niveau du ou des bords de la cuve s'il y a contact entre la mèche et ledit bord.

Dans un autre mode de réalisation, ladite au moins une pièce d'embarrage est un rouleau de compression de forme convexe, concave ou cylindrique.

La forme convexe est favorable à l'épanouissement alors que la forme concave est défavorable à l'épanouissement bien qu'il s'effectue néanmoins.

L'expression « rouleau de compression » signifie que la mèche qui défile s'appuie partiellement ou totalement sur la surface dudit rouleau de compression, ce qui induit l'épanouissement de la dite mèche.

Avantageusement, ledit au moins un rouleau de compression est de forme cylindrique et le pourcentage d'épanouissement de ladite mèche ou desdites mèches entre l'entrée et la sortie dudit lit fluidisé est compris de 1% à 400%, préférentiellement entre 30% et 400% préférentiellement entre 30% et 150%, préférentiellement entre 50% et 150%.

L'épanouissement est fonction du matériau fibreux utilisé. Par exemple, l'épanouissement d'un matériau en fibre de carbone est beaucoup plus important que celui d'une fibre de lin.

L'épanouissement est aussi fonction du nombre de fibres ou filaments dans la mèche, de leur diamètre moyen et de leur cohésion de par l'ensimage.

Le diamètre dudit au moins un rouleau de compression est compris de 3 mm à 500 mm, préférentiellement de 10 mm à 100 mm, en particulier de 20 mm à 60 mm.

Au-dessous de 3 mm, la déformation de la fibre induite par le rouleau de compression est trop importante.

Avantageusement, le rouleau de compression est cylindrique et non cannelé et en particulier est métallique.

Lorsque la pièce d'embarrage est au moins un rouleau de compression, selon une première variante, un seul rouleau de compression est présent dans le lit fluidisé et ladite imprégnation est effectuée au niveau de l'angle α1 formé par ladite mèche ou lesdites mèches entre l'entrée dudit rouleau de compression et la tangente verticale audit rouleau de compression.

L'angle α1 formé par ladite mèche ou lesdites mèches entre l'entrée dudit rouleau de compression et la tangente verticale audit rouleau de compression permet la formation d'une zone dans laquelle la poudre va se concentrer conduisant ainsi à un « effet de coin » qui avec l'épanouissement simultané de la mèche par ledit rouleau de compression permet une imprégnation sur une largeur plus importante de mèche et donc une imprégnation améliorée comparée aux techniques de l'art antérieur. Le couplage avec le temps de séjour contrôlé permet alors une imprégnation à cœur.

Avantageusement, l'angle α1 est compris de 0 à 89°, préférentiellement 5° à 85°, préférentiellement de 5° à 45°, préférentiellement de 5° à 30°.

Néanmoins, un angle α1 compris de 0 à 5° est susceptible d'engendrer des risques de sollicitation mécanique, ce qui conduira à la casse des fibres et un angle α1 compris de 85° à 89° ne crée pas suffisamment d'effort mécanique pour créer « l'effet de coin ».

Une valeur de l'angle α1 égale à 0° correspond donc à une fibre verticale. Il est bien évident que la hauteur du rouleau de compression cylindrique est réglable permettant ainsi de pouvoir positionner la fibre verticalement.

On ne sortirait pas du cadre de l'invention si la paroi de la cuve était percée de manière à pouvoir permettre la sortie de la mèche.

Avantageusement, le bord de la cuve (83a) est équipé d'un rouleau, notamment cylindrique et rotatif sur lequel défile ladite mèche ou les dites mèches conduisant ainsi à un épanouissement préalable.

Avantageusement, un ou plusieurs embarrages sont présents en aval de la cuve comprenant le lit fluidisé au niveau duquel ou desquels l'épanouissement est initié.

Avantageusement, l'épanouissement est initié au niveau du ou desdits embarrages ci-dessus définis et se poursuit au niveau du bord de la cuve (83a).

L'épanouissement est alors maximum après passage au niveau du ou des rouleaux de compression.

La figure 2 décrit un mode de réalisation, sans être limité à celui-ci, à un seul rouleau de compression, avec une cuve (20) comprenant un lit fluidisé (22) dans lequel un seul rouleau de compression cylindrique est présent. L'angle α1 est l'angle formé entre la tangente verticale du rouleau de compression et la mèche qui arrive au contact dudit rouleau.

Les flèches au niveau de la fibre indiquent le sens de défilement de la fibre.

Avantageusement, le niveau de ladite poudre dans ledit lit fluidisé est au moins situé à la mi-hauteur dudit rouleau de compression.

Il est bien évident que « l'effet de coin » provoqué par l'angle α1 favorise l'imprégnation sur une face mais l'épanouissement de ladite mèche obtenu grâce au rouleau de compression permet aussi d'avoir une imprégnation sur l'autre face de ladite mèche. Autrement dit, ladite imprégnation est favorisée sur une face de ladite mèche ou desdites mèches au niveau de l'angle α1 formé par ladite mèche ou lesdites mèches entre l'entrée dudit au moins un rouleau de compression R1 et la tangente verticale au rouleau de compression R1 mais l'épanouissement permet aussi d'imprégner l'autre face.

L'angle α1 est tel que défini ci-dessus.

### S'agissant du matériau fibreux

Concernant les fibres de constitution dudit matériau fibreux, ce sont notamment des fibres d'origine minérale, organique ou végétale. Parmi les fibres d'origine minérale, on peut citer les fibres de carbone, les fibres de verre, de carbure de silicium, les fibres à base de basalte ou de basalte, les fibres de silice, par exemple.

Parmi les fibres d'origine organique, on peut citer les fibres à base de polymère thermoplastique ou thermodurcissable, telles que des fibres de polyamides semi-aromatiques, des fibres d'aramide ou des fibres en polyoléfines par exemple.

De préférence, elles sont à base de polymère thermoplastique amorphe et présentent une température de transition vitreuse Tg supérieure à la Tg du polymère ou mélange de polymère thermoplastique de constitution de la matrice de pré-imprégnation lorsque ce dernier est amorphe, ou supérieure à la Tf du polymère ou mélange de polymère thermoplastique de constitution de la matrice de pré-imprégnation lorsque ce dernier est semi-cristallin. Avantageusement, elles sont à base de polymère thermoplastique semi-cristallin et présentent une température de fusion Tf supérieure à la Tg du polymère ou mélange de polymère thermoplastique de constitution de la matrice de pré-imprégnation lorsque ce dernier est amorphe, ou supérieure à la Tf du polymère ou mélange de polymère thermoplastique de constitution de la matrice de pré-imprégnation lorsque ce dernier est semi-cristallin. Ainsi, il n'y a aucun risque de fusion pour les fibres organiques de constitution du matériau fibreux lors de l'imprégnation par la matrice thermoplastique du composite final.

Parmi les fibres d'origine végétale, on peut citer les fibres naturelles à base de lin, de chanvre, de lignine, de bambou, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation de la matrice de polymère thermoplastique.

Le matériau fibreux peut également être un tissu, tressé ou tissé avec des fibres.

Il peut également correspondre à des fibres avec des fils de maintien.

Ces fibres de constitution peuvent être utilisées seules ou en mélanges. Ainsi, des fibres organiques peuvent être mélangées aux fibres minérales pour être pré-imprégnée de polymère thermoplastique et former le matériau fibreux pré-imprégné.

De préférence le matériau fibreux est constitué par des fibres continues de carbone, de verre ou de carbure de silicium ou leur mélange, en particulier des fibres de carbone. Il est utilisé sous forme d'une mèche ou de plusieurs mèches.

Dans les matériaux imprégnés aussi appelés « prêts à l'emploi », le polymère ou mélange de polymères thermoplastiques d'imprégnation est réparti uniformément et de manière homogène autour des fibres. Dans ce type de matériau, le polymère thermoplastique d'imprégnation doit être réparti de manière la plus homogène possible au sein des fibres afin d'obtenir un minimum de porosités, c'est à dire un minimum de vides entre les fibres. En effet, la présence de porosités dans ce type de matériaux peut agir comme des points de concentrations de contraintes, lors d'une mise sous contrainte mécanique de traction par exemple, et qui forment alors des points d'initiation de rupture du matériau fibreux imprégné et le fragilisent mécaniquement. Une répartition homogène du polymère ou mélange de polymères améliore donc la tenue mécanique et l'homogénéité du matériau composite formé à partir de ces matériaux fibreux imprégnés.

Ainsi, dans le cas de matériaux imprégnés dits « prêts à l'emploi », le taux de fibres dans ledit matériau fibreux imprégné est compris de 45 à 65 % en volume, de préférence de 50 à 60% en volume, notamment de 54 à 60% en volume.

La mesure du taux d'imprégnation peut être réalisée par analyse d'image (utilisation de microscope ou d'appareil photo ou de caméra numérique, notamment), d'une coupe transversale du ruban, en divisant la surface du ruban imprégné par le polymère par la surface totale du produit (surface imprégnée plus surface des porosités). Afin d'obtenir une image de bonne qualité il est préférable d'enrober le ruban découpé dans son sens transversal dans une résine de polissage standard et de polir avec un protocole standard permettant l'observation de l'échantillon au microscope grossissement fois 6 au minimum.

Avantageusement, le taux de porosité dudit matériau fibreux imprégné est inférieur à 10%, notamment inférieur à 5%, en particulier inférieur à 2%.

Il faut noter qu'un taux de porosité nul est difficilement accessible et que par conséquent, avantageusement le taux de porosité est supérieur à 0% mais inférieur aux taux cités ci-dessus.

Le taux de porosité correspond au taux de porosité fermée et peut être déterminée soit par microscopie électronique, soit comme étant l'écart relatif entre la densité théorique et la densité expérimentale dudit matériau fibreux imprégné tel que décrit dans la partie exemples de la présente invention.

Les fibres pouvant entrer dans la composition des matériaux fibreux peuvent avoir des grammages linéiques ou titre ou titrage ou « tex » différents et/ou être en nombre différent dans les mèches. Aussi, les mèches les plus classiquement utilisées sont composées de 600 à 4800 tex pour les fibres de verre et de 3000 (3K), 6000 (6K), 12000 (12K), 24000 (24K), 48000 (48K), 50 000 (50K) ou 400 000(400K) fibres pour les fibres de carbone. Les fibres de carbone présentent généralement un diamètre proche de 7-8 µm et les fibres de verre un diamètre d'environ 13, 15, 17 ou 20 µm par exemple.

Il est bien évident que l'épanouissement est fonction du nombre de fibres présentes dans le matériau fibreux ou la mèche.

Ainsi, pour une mèche de 12K l'épanouissement représente de 2 à 3 fois la largeur initiale I. pour une mèche de 24K l'épanouissement représente de 2 à 4 fois la largeur initiale I et pour une mèche de 50K l'épanouissement représente de 1,5 à 2,5 fois la largeur initiale I.

### S'agissant du polymère thermoplastique de la matrice

On entend par thermoplastique, ou polymère thermoplastique, un matériau généralement solide à température ambiante, pouvant être semi-cristallin ou amorphe, et qui se ramollit lors d'une augmentation de température, en particulier après passage de sa température de transition vitreuse (Tg) et s'écoule à plus haute température lorsqu'il est amorphe, ou pouvant présenter une fusion franche au passage de sa température dite de fusion (Tf) lorsqu'il est semi-cristallin, et qui redevient solide lors d'une diminution de température en dessous de sa température de cristallisation (pour un semi-cristallin) et en dessous de sa température de transition vitreuse (pour un amorphe).

La Tg et la Tf sont déterminées par analyse calorimétrique différentielle (DSC) selon la norme 11357-2 :2013 et 11357-3 :2013 respectivement.

Concernant le polymère de constitution de la matrice de pré-imprégnation du matériau fibreux, c'est avantageusement un polymère thermoplastique ou un mélange de polymères thermoplastiques. Ce polymère ou mélange de polymères thermoplastiques peut être broyé sous forme de poudre, afin de pouvoir l'utiliser dans un dispositif tel qu'une cuve, notamment en lit fluidisé ou en dispersion aqueuse.

Le dispositif sous forme de cuve, notamment en lit fluidisé peut être ouvert ou fermé. De manière facultative, le polymère thermoplastique ou mélange de polymères thermoplastiques comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges. Ces charges permettent de conduire l'électricité et la chaleur, et permettent par conséquent de faciliter la fusion de la matrice polymère lorsqu'elle est chauffée.

Optionnellement, ledit polymère thermoplastique comprend au moins un additif, notamment choisi parmi un catalyseur, un antioxydant, un stabilisant thermique, un stabilisant UV, un stabilisant à la lumière, un lubrifiant, une charge, un plastifiant, un agent ignifugeant, un agent nucléant, un allongeur de chaîne et un colorant, un agent conducteur électrique, un agent conducteur thermique ou un mélange de ceux-ci. Avantageusement, ledit additif est choisi parmi un agent ignifugeant, un agent conducteur électrique et un agent conducteur thermique.

Selon une autre variante, le polymère thermoplastique ou mélange de polymères thermoplastiques peut en outre comprendre des polymères à cristaux liquides ou du poly(butylène téréphtalate) cyclisé, ou des mélanges en contenant, comme la résine CBT100 commercialisée par la société CYCLICS CORPORATION. Ces composés permettent notamment de fluidifier la matrice polymère à l'état fondu, pour une meilleure pénétration au cœur des fibres. Selon la nature du polymère, ou mélange de polymères thermoplastiques, utilisé pour réaliser la matrice de pré-imprégnation, notamment sa température de fusion, on choisira l'un ou l'autre de ces composés.

Les polymères thermoplastiques entrant dans la constitution de la matrice de pré-imprégnation du matériau fibreux, peuvent être choisis parmi :
- les polymères et copolymères de la famille des polyamides (PA) aliphatiques, cycloaliphatiques ou des PA semi-aromatiques (encore dénommés polyphtalamides (PPA)),
- les PEBA,
- les polyurées, en particulier aromatiques,
- les polymères et copolymères de la famille des acryliques comme les polyacrylates, et plus particulièrement le polyméthacrylate de méthyle (PMMA) ou ses dérivés
- les polymères et copolymères de la famille des poly(aryléthercétones) (PAEK) comme le poly(étheréthercétone) (PEEK), ou les poly(aryléthercétonescétones) (PAEKK) comme le poly(éthercétonecétone) (PEKK) ou leurs dérivés,
- les polyéther-imides (PEI) aromatiques,
- les polyarylsulfures, en particulier les polyphénylène sulfures (PPS),
- les polyarylsulfones, en particulier les polyphénylène sulfones (PPSU),
- les polyoléfines, en particulier le polypropylène (PP);
- l'acide polylactique (PLA),
- l'alcool polyvinylique (PVA),
- les polymères fluorés, en particulier le poly(fluorure de vinylidène) (PVDF), ou le polytétrafluoroéthylène (PTFE) ou le polychlorotrifluoroéthylène (PCTFE), et leurs mélanges.

Avantageusement, lorsque ledit polymère est un mélange de deux polymères P1 et P2, la proportion en poids de polymère P1 et P2 est comprise de 1-99% à 99-1%.

Avantageusement, lorsque ledit polymère thermoplastique est un mélange, et que le procédé de préimprégnation utilise une poudre sèche, ce mélange se présente sous forme d'une poudre obtenue soit par « dry blend » avant introduction dans la cuve de pré-imprégnation ou par « dry blend » réalisé directement dans la cuve ou encore, par broyage d'un compound réalisé au préalable en extrudeuse.

Avantageusement, ce mélange est composé d'une poudre obtenue par « dry blend », avant l'introduction dans la cuve ou directement dans la cuve, et ce mélange de deux polymères P1 et P2 est un mélange de PEKK et de PEI.

Avantageusement, le mélange PEKK/PEI est compris de 90-10% à 60-40% en poids, en particulier de 90-10% à 70-30% en poids.

Le polymère thermoplastique peut correspondre au polymère final non réactif qui imprégnera le matériau fibreux ou à un prépolymère réactif, qui imprégnera également le matériau fibreux, mais est susceptible de réagir sur lui-même ou avec un autre prépolymère, en fonction des fins de chaîne portées par ledit prépolymère, après pré-imprégnation, ou encore avec un allongeur de chaîne et notamment lors d'un chauffage au niveau des embarrages dans le four et/ou lors de la mise en œuvre de la tape dans le procédé final de fabrication de la pièce composite.

L'expression « polymère non réactif » signifie que le poids moléculaire n'est plus susceptible d'évoluer significativement, c'est-à-dire que sa masse moléculaire en nombre (Mn) évolue de moins de 50% lors de sa mise en œuvre et correspond donc au polymère polyamide final de la matrice thermoplastique.

A l'opposé, l'expression « polymère réactif » signifie que le poids moléculaire dudit polymère réactif va évoluer durant la mise en œuvre par réaction de prépolymères réactifs entre eux par condensation, substitution ou avec un allongeur de chaîne par polyaddition et sans élimination de sous-produits volatils pour conduire au polymère polyamide final (non réactif) de la matrice thermoplastique.

Selon une première possibilité, ledit prépolymère peut comprendre ou être constituée de, au moins un prépolymère (polyamide) réactif porteur sur la même chaîne (c'est-à-dire sur le même prépolymère), de deux fonctions terminales X' et Y' fonctions respectivement coréactives entre elles par condensation, plus particulièrement avec X' et Y' étant amine et carboxy ou carboxy et amine respectivement. Selon une deuxième possibilité, ledit prépolymère peut comprendre ou être constituée de, au moins deux prépolymères polyamides réactifs entre eux et porteurs chacun respectivement de deux fonctions terminales X' ou Y', identiques (identiques pour même prépolymère et différentes entre les deux prépolymères), ladite fonction X' d'un prépolymère pouvant réagir seulement avec ladite fonction Y' de l'autre prépolymère, en particulier par condensation, plus particulièrement avec X' et Y' étant amine et carboxy ou carboxy et amine respectivement.

Selon une troisième possibilité, ledit prépolymère peut comprendre ou être constituée de, au moins un prépolymère dudit polymère polyamide thermoplastique, porteur de n fonctions réactives terminales X, choisies parmi : -NH2, -CO2H et -OH, de préférence NH2 et -CO2H avec n étant 1 à 3, de préférence de 1 à 2, plus préférentiellement 1 ou 2, plus particulièrement 2 et au moins un allongeur de chaîne Y-A'-Y, avec A' étant un biradical hydrocarboné, porteur de 2 fonctions réactives terminales Y identiques, réactives par polyaddition avec au moins une fonction X dudit prépolymère a1), de préférence de masse moléculaire inférieure à 500, plus préférentiellement inférieure à 400.

La masse moléculaire moyenne en nombre Mn dudit polymère final de la matrice thermoplastique est de préférence dans une plage allant de 10000 à 40000, de préférence de 12000 à 30000. Ces valeurs Mn peuvent correspondre à des viscosités inhérentes supérieures ou égales à 0,8 telle que déterminées dans le m-crésol selon la norme ISO 307:2007 mais en changeant le solvant (utilisation du m-crésol à la place de l'acide sulfurique et la température étant de 20°C).

Lesdits prépolymères réactifs selon les deux options citées plus haut, ont une masse moléculaire moyenne en nombre Mn allant de 500 à 10000, de préférence de 1000 à 6800, en particulier de 2500 à 6800.

Les Mn sont déterminées en particulier par le calcul à partir du taux des fonctions terminales déterminé par titration potentiométrique en solution et la fonctionnalité desdits prépolymères. Les masses Mn peuvent également être déterminées par chromatographie d'exclusion stérique ou par RMN.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Le polyamide peut être un homopolyamide ou un copolyamide ou un mélange de ceux-ci.

Avantageusement, les prépolymères de constitution de la matrice sont choisis parmi les Polyamides (PA), en particulier choisis parmi les polyamides aliphatiques, les polyamides cycloaliphatiques, et les polyamides semi-aromatiques (polyphthalamides) éventuellement modifiés par des motifs urées, et leur copolymères, le Polyméthacrylate de méthyle (PPMA) et ses copolymères, les Polyether imides (PEI), le Poly(sulfure de phénylène) (PPS), le Poly(sulfone de phénylène) (PPSU), le PVDF, le Poly(éthercétonecétone) (PEKK), le Poly(étheréthercétone) (PEEK), les polymères fluorés comme le poly(fluorure de vinylidène) (PVDF).

Pour les polymères fluorés, on peut utiliser un homopolymère du fluorure de vinylidène (VDF de formule CH₂=CF₂) ou un copolymère du VDF comprenant en poids au moins 50% en masse de VDF et au moins un autre monomère copolymérisable avec le VDF. La teneur en VDF doit être supérieure à 80% en masse, voire mieux 90% en masse, pour assurer une bonne résistance mécanique et chimique à la pièce de structure, surtout lorsqu'elle est soumise à des contraintes thermiques et chimiques. Le comonomère peut être un monomère fluoré tel que par exemple le fluorure de vinyle. Pour des pièces de structure devant résister à des températures élevées, outre les polymères fluorés, on utilise avantageusement selon l'invention les PAEK (PolyArylEtherKetone) tels que les poly(éther cétones) PEK, le poly(éther éther cétone) PEEK, le poly(éther cétone cétone) PEKK, le Poly(éther cétone éther cétone cétone) PEKEKK ou les PA de haute température de transition vitreuse Tg). Avantageusement, ledit polymère thermoplastique est un polymère dont la température de transition vitreuse est telle que Tg ≥ 80°C, notamment ≥ 100°C, en particulier ≥ 120°C, notamment ≥ 140°C, ou un polymère semi-cristallin dont la température de fusion Tf ≥ 150°C.

Avantageusement, ledit polymère thermoplastique de la matrice est un polymère thermoplastique non réactif.

Avantageusement, ledit au moins un prépolymère thermoplastique est sélectionné parmi les polyamides, le PEKK, le PEI et un mélange PEKK et de PEI. Avantageusement, ledit polyamide est choisi parmi les polyamides aliphatiques, les polyamides cycloaliphatiques et les polyamides semi-aromatiques (polyphthalamides).

Avantageusement, ledit prépolymère polyamide aliphatique est choisi parmi :
- le polyamide 6 (PA6), le polyamide 11 (PA11), le polyamide 12 (PA12), le polyamide 66 (PA66), le polyamide 46 (PA46), le polyamide 610 (PA610), le polyamide 612 (PA612), le polyamide 1010 (PA1010), le polyamide 1012 (PA1012), le polyamide 11/1010 et le polyamide 12/1010, ou un mélange de ceux-ci ou un copolyamide de ceux-ci, et les copolymères blocs, notamment polyamide/polyéther (PEBA), et ledit polyamide semi-aromatique est un polyamide semi-aromatique, éventuellement modifié par des unités urées, notamment un PA MXD6 et un PA MXD10 ou un polyamide semi-aromatique de formule X/YAr, tel que décrits dans EP1505099, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques,

X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18,notamment un polyamide de formule A/6T, A/9T, A/10T ou A/11T, A étant tel que défini ci-dessus, en particulier un polyamide PA 6/6T, un PA 66/6T, un PA 6I/6T, un PA MPMDT/6T, un PA PA11/10T, un PA 11/6T/10T, un PA MXDT/10T, un PA MPMDT/10T, un PA BACT/10T, un PA BACT/6T, PA BACT/10T/6T, PA BACT/10T/11, PA BACT/6T/11.

T correspond à l'acide téréphtalique, MXD correspond à la m-xylylène diamine, MPMD correspond à la méthylpentaméthylène diamine et BAC correspond au bis(aminométhyl)cyclohexane.

Avantageusement, le polymère thermoplastique est un polyamide semi-aromatique.

Avantageusement, le polymère thermoplastique est un polyamide semi-aromatique choisi parmi un PA MPMDT/6T, un PA PA11/10T, un PA 11/6T/10T, un PA MXDT/10T, un PA MPMDT/10T, un PA BACT/10T, un PA BACT/6T, PA BACT/10T/6T, PA BACT/10T/11, PA BACT/6T/11.

### S'agissant de l'étape de pré-imprégnation :

L'étape de pré-imprégnation comme déjà indiquée ci-dessus est effectuée en lit fluidisé.

Avantageusement, la pré-imprégnation est effectuée en lit fluidisé, et une ou plusieurs pièce(s) d'embarrage(s) (E) est(sont) présente(s) en amont dudit système.

Le procédé de pré-imprégnation par lit fluidisé est décrit dans WO 2018/115736.

Un exemple d'unité de mise en œuvre d'un procédé de fabrication sans l'étape de chauffage au moyen d'au moins une pièce d'embarrage est décrit dans la demande internationale WO 2015/121583.

Ce système décrit l'utilisation d'une cuve comprenant un lit fluidisé pour effectuer l'étape de pré-imprégnation et peut être utilisé dans le cadre de l'invention.

Avantageusement, la cuve comprenant le lit fluidisé est munie d'au moins une pièce d'embarrage (E') qui peut être un rouleau de compression).

**Il** faut noter que les pièces d'embarrage (E) et (E') peuvent être identiques ou différentes que ce soit au niveau du matériau ou de la forme et ses caractéristiques (diamètre, longueur, largeur, hauteur ... en fonction de la forme).

Cependant, la pièce d'embarrage (E') n'est ni chauffante ni chauffée.

L'étape de pré-imprégnation du matériau fibreux est réalisée par passage d'une ou plusieurs mèches dans un dispositif de pré-imprégnation en continu, comprenant une cuve (20) muni d'au moins une pièce d'embarrage (E') et comprenant un lit fluidisé (22) de poudre de ladite matrice polymère.

La poudre de ladite matrice polymère ou polymère est mise en suspension dans un gaz G (de l'air par exemple) introduit dans la cuve et circulant dans la cuve (20) à travers une trémie (21). La ou les mèches sont mises en circulation dans ce lit fluidisé (22).

La cuve peut avoir toute forme, notamment cylindrique ou parallélépipédique, en particulier un parallélépipède rectangle ou un cube, avantageusement un parallélépipède rectangle.

La cuve (20) peut être une cuve ouverte ou fermée. Avantageusement, elle est ouverte.

Dans le cas où la cuve est fermée, elle est alors équipée d'un système d'étanchéité pour que la poudre de ladite matrice polymère ne puisse pas sortir de ladite cuve.

Cette étape de pré-imprégnation est donc effectuée par voie sèche, c'est à dire que la matrice polymère thermoplastique est sous forme de poudre, notamment en suspension dans un gaz, en particulier de l'air, mais ne peut pas être en dispersion dans un solvant ou dans l'eau.

Chaque mèche à pré-imprégner après passage sur les embarrages (E) rentre dans une cuve (20).

La mèche de fibres ou les mèches de fibres parallèles passent alors dans une cuve (20), comprenant en particulier un lit fluidisé (22), munie d'au moins une pièce d'embarrage (E') qui est un rouleau de compression ou est déjà présente dans la cuve et pénètre alors dans le lit fluidisé (22), munie d'au moins une pièce d'embarrage (E') La mèche de fibres ou les mèches de fibres parallèles ressort(ent) ensuite de la cuve après pré-imprégnation après contrôle éventuel du temps de séjour dans la poudre.

Dans un mode de réalisation, le procédé selon l'invention comprend une étape de chauffage du matériau fibreux pré-imprégné pour fondre le polymère thermoplastique de la matrice et finaliser l'imprégnation dudit matériau fibreux.

Ladite étape de chauffage peut être effectuée telle que décrite dans WO 2018/234439: Une première étape de chauffage peut être immédiatement consécutive à l'étape de pré-imprégnation ou alors d'autres étapes peuvent intervenir entre l'étape de pré-imprégnation et l'étape de chauffage.

Avantageusement, ladite première étape de chauffage est immédiatement consécutive à l'étape de pré-imprégnation. L'expression « immédiatement consécutive » signifie qu'il n'y a pas d'étape intermédiaire entre l'étape de pré-imprégnation et ladite étape de chauffage.

Avantageusement, une seule étape de chauffage est effectuée, immédiatement consécutive à l'étape de pré-imprégnation.

Avantageusement, ledit au moins un système de chauffage est choisi parmi une lampe infrarouge, une lampe UV et un chauffage par convection.

Le matériau fibreux étant en contact avec le ou les embarrage(s) dans le système de chauffage, et l'embarrage étant conducteur, le système de chauffage s'effectue donc également par conduction.

Avantageusement, ledit au moins un système de chauffage est choisi parmi une lampe infrarouge.

Avantageusement, ladite au moins une pièce d'embarrage (E") est un rouleau de compression de forme convexe, concave ou cylindrique.

Il faut noter que les rouleaux de compression correspondant aux pièces d'embarrage (E), (E') et (E") peuvent être identiques ou différentes que ce soit au niveau du matériau ou de la forme et ses caractéristiques (diamètre, longueur, largeur, hauteur ... en fonction de la forme).

La forme convexe est favorable à l'épanouissement alors que la forme concave est défavorable à l'épanouissement bien qu'il s'effectue néanmoins.

La au moins une pièce d'embarrage (E") peut également être une alternance de forme convexe et concave. Dans cas, le défilement de la mèche sur un rouleau de compression de forme convexe provoque l'épanouissement de ladite mèche puis le défilement de la mèche sur un rouleau de compression de forme concave provoque la rétractation de la mèche et ainsi de suite permettant si besoin d'améliorer l'homogénéité de l'imprégnation, notamment à cœur.

L'expression « rouleau de compression » signifie que la mèche qui défile s'appuie partiellement ou totalement sur la surface dudit rouleau de compression, ce qui induit l'épanouissement de ladite mèche.

Les rouleaux peuvent être libres (en rotation) ou fixes.

Ils peuvent être lisses, striés ou gorgés.

Avantageusement, les rouleaux sont cylindriques et striés. Lorsque les rouleaux sont striés, deux stries peuvent être présentes en sens opposée l'une de l'autre en partant du centre dudit rouleau permettant ainsi l'éloignement des mèches vers l'extérieure du rouleau ou en sens opposée l'une de l'autre en partant de l'extérieur dudit rouleau permettant ainsi de ramener les mèches vers le centre du rouleau.

Cette étape de chauffage permet d'homogénéiser la pré-imprégnation, de finaliser ainsi l'imprégnation et d'avoir ainsi une imprégnation à cœur et d'avoir un taux élevé de fibres en volume, notamment constant dans au moins 70% du volume de la bande ou ruban, notamment dans au moins 80% du volume de la bande ou ruban, en particulier dans au moins 90% du volume de la bande ou ruban, plus particulièrement dans au moins 95% du volume de la bande ou ruban, ainsi que de diminuer la porosité.

L'épanouissement est fonction du matériau fibreux utilisé. Par exemple, l'épanouissement d'un matériau en fibre de carbone est beaucoup plus important que celui d'une fibre de lin.

L'épanouissement est aussi fonction du nombre de fibres dans la mèche, de leur diamètre moyen et de leur cohésion de par l'ensimage.

Le diamètre dudit au moins un rouleau de compression (embarrage (E")) est compris de 3 mm à 100 mm, préférentiellement de 3 mm à 20 mm, en particulier de 5 mm à 10 mm.

Au-dessous de 3 mm, la déformation de la fibre induite par le rouleau de compression est trop importante.

Avantageusement, le rouleau de compression est cylindrique et non cannelé et en particulier est métallique.

Avantageusement, ladite au moins une pièce d'embarrage (E") est constituée d'au moins un 1 rouleau de compression de forme cylindrique.

Avantageusement, ladite au moins une pièce d'embarrage (E") est constituée de 1 à 15 rouleaux de compression (R1 à R15) de forme cylindrique, préférentiellement de 3 à 15 rouleaux de compression (R3 à R15), notamment de 6 à 10 rouleaux de compression (R6 à R10).

Il est bien évident que quel que soit le nombre de pièces d'embarrages (E") présentes, elles sont toutes situées ou comprises dans l'environnement du système de chauffage, c'est-à-dire qu'elle ne sont pas à l'extérieur du système de chauffage.

Selon un autre aspect, la présente invention concerne l'utilisation du procédé tel que défini ci-dessus, pour la fabrication de rubans calibrés adaptés à la fabrication de pièces composites en trois dimensions, par dépose automatique desdits rubans au moyen d'un robot.

Avantageusement, lesdites pièces composites concerne les domaines des transports, en particulier automobile, du pétrole et du gaz, en particulier l'offshore, de l'hydrogène, du stockage de gaz, notamment de l'hydrogène, aéronautique, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical et de l'électronique.

Selon un autre aspect, la présente divulgation concerne une pièce composite en trois dimensions, caractérisée en ce qu'elle résulte de l'utilisation du procédé tel que défini ci-dessus.

Selon encore un autre aspect, la présente invention concerne une cuve (20) comprenant un lit fluidisé (22), un racloir ou un système transverse d'aspiration qui aspire les particules fines pour une utilisation dans un procédé tel que défini ci-dessus.

Selon encore un autre aspect, la présente invention concerne une cuve (20) comprenant un lit fluidisé (22), un racloir et un système transverse d'aspiration qui aspire les particules fines pour une utilisation dans un procédé tel que défini ci-dessus.

### Brève description des figures

[Fig. 1] présente un schéma partiel d'une unité de mise en œuvre du procédé de fabrication d'un matériau fibreux pré-imprégné selon WO 2018/115736.
[Fig. 2] présente une cuve comprenant un lit fluidisé munie d'au moins une pièce d'embarrage (E') qui peut être un rouleau de compression.

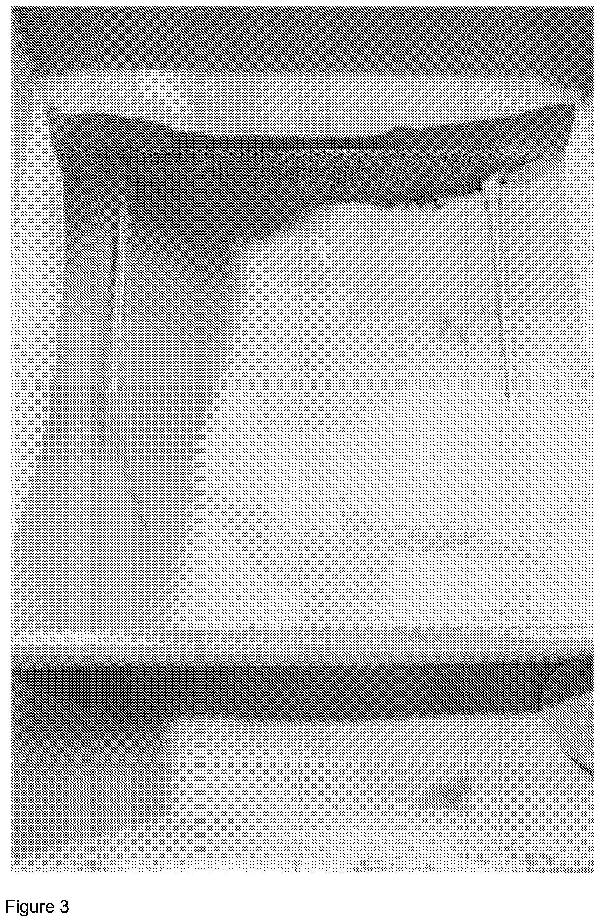

[Fig. 3] présente une photo de la cuve avec un racloir.

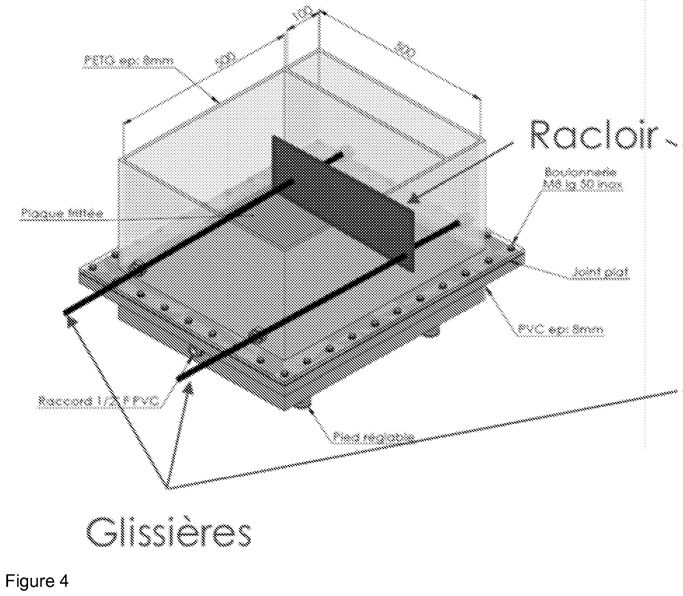

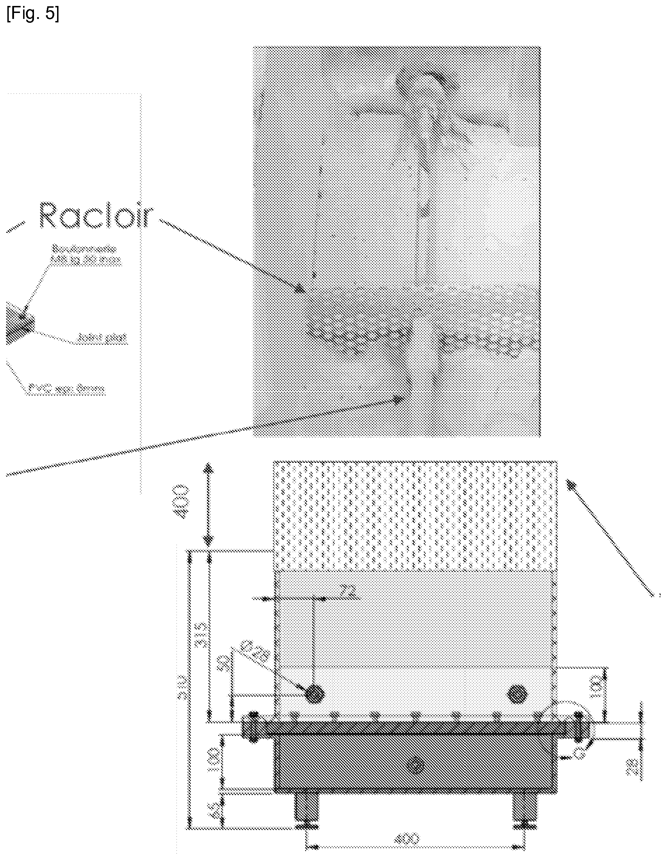

[Fig. 4] est la présentation du système de racloir automatisé du fuzz et du désentassage de la poudre au cours du temps. Le fuzz est récupéré automatiquement dans une zone inopérante de la cuve ne pertubant pas le reste de la cuve. La figure 4 et la figure 5 ci-dessous ne font qu'une figure, mais pour des raisons de visibilité, elle a été scindée en deux parties, la figure 4 représente la partie gauche et la figure 5 représente la partie droite.
[Fig. 5] est la partie droite telle que ci-dessus explicité.

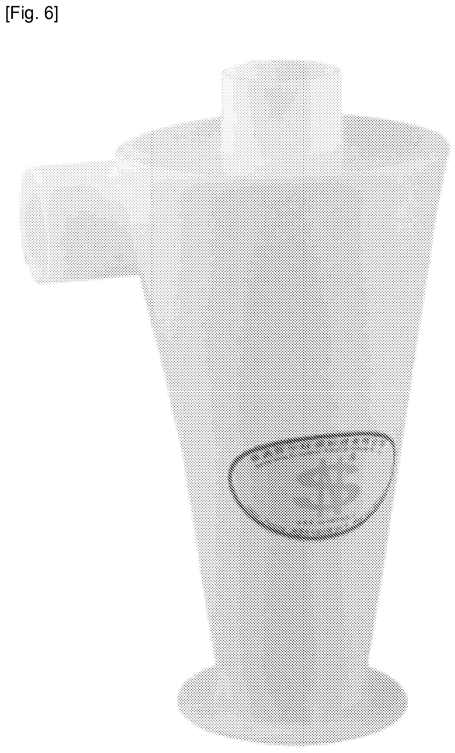

[Fig. 6] présente un cyclone permettant de récupérer les poudres aspirées au-dessus du lit fluidisé.
[Fig. 7] présente la diminution du niveau du lit fluidisé et du pourcentage en masse de polymère thermoplastique (BACT/10T) dans le matériau fibreux AS4 de la société Hexcel en fonction du temps. Echelle de gauche : hauteur du lit Echelle de droite : masse en % de polymère thermoplastique (BACT/10T).

### Exemples

### Exemple 1

Un essai de production a été effectué sur une ligne pilote de pré-imprégnation d'un matériau fibreux AS4 12k de la société Hexcel par une matrice polymère thermoplastique BACT/10T de granulométrie D50 = 106µm.dans une cuve parallélépipédique transparente de dimension Lxlxh = 500x500x400mm³, en rajoutant uniquement de la poudre manuellement au fur et à mesure de la pré-imprégnation. La poudre rajoutée est de granulométrie égale à celle dans la cuve au départ. On se place alors dans le pire des cas dans lequel on ne contrôle ni ne réajuste rien en terme de granulométrie.
4 familles de poudres sont obtenues dont on peut analyser les granulométries :
- celle emportée par le matériau fibreux et dont la répartition granulométrique est sensiblement équivalente à celle présente dans la cuve → G0
- celle qui s'envole et retombe à côté de la cuve et celle qui est emportée par le matériau fibreux et tombe du matériau fibreux avant d'être fondue → G1
- celle initialement présente dans la cuve → G2
- celle présente dans la cuve à la fin de la production → G3

Après 1 semaine de production, le volume de poudre de granulométrie G1 retrouvé à côté de la cuve a été mesuré comme égal à 1/20 de celui du volume de poudre initialement présent dans la cuve.

Après 1 semaine de production, on obtient ainsi le tableau suivant :

**[Tableau 1]**

| | | D10 | D50 | D90 |
|---|---|---|---|---|
| | G0 | 27 | 110 | 268 |
| | G1 | 36 | 147 | 294 |
| | G2 | 27 | 110 | 268 |
| | G3 | 87 | 191 | 333 |
| Sans recyclage on a | Ecart G3&G2 | 69% | 42% | 20% |

Avec recyclage, on obtient une granulométrie G4 dans la cuve sensiblement équivalente à G0

### Exemple 2

Cuve avec racloir automatisé et système d'alimentation automatique de la poudre en cours de production.
Matériau fibreux : fibre de carbone AS4 12k de la société Hexcel
Polymère thermoplastique : BACT/10T (40/60 en pourcentage molaire) présentant une Tg de 140°C et de granulométrie D50 = 106µm.

Un ratissage est effectué avec le racloir toutes les 15 minutes, ce qui permet de revenir à la hauteur de lit initiale et de maintenir le taux de BACT/10T emporté sans ajout de poudre pendant 1h40, ce qui permet de récupérer le fuzz généré qui s'accumule à la surface du fritté.

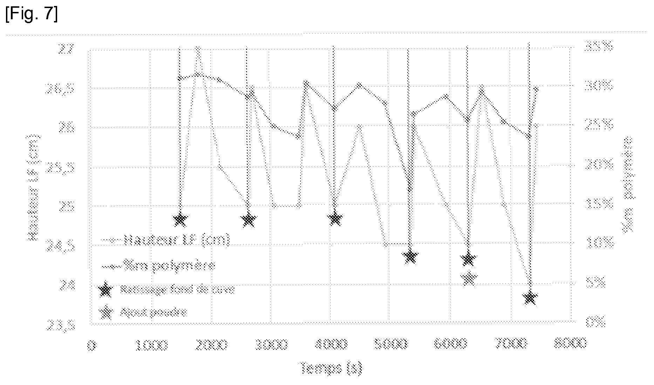

Les résultats sont présentés figure 7.

## Revendications

1. Procédé de fabrication d'un matériau fibreux imprégné comprenant au moins un matériau fibreux en fibres continues et au moins une matrice polymère thermoplastique et comprenant une étape de pré-imprégnation dudit matériau fibreux par une matrice polymère thermoplastique se présentant sous forme de poudre, **caractérisé en ce que** ladite étape de pré-imprégnation est effectuée par voie sèche dans une cuve (20) comprenant un lit fluidisé (22), ladite étape de pré-imprégnation étant effectuée avec un maintien sensiblement constant du niveau h de la poudre et de la masse m de la poudre présente dans la cuve (20), ledit niveau h étant compris de hᵢ à hᵢ - 3% , en particulier hᵢ - 2%, durant la mise en œuvre de l'étape de pré-imprégnation, hᵢ étant le niveau initial de la poudre dans ladite cuve (20) au démarrage de la mise en œuvre de l'étape de pré-imprégnation, ladite masse m étant comprise de mᵢ à mᵢ ± 0,5% durant la mise en œuvre de l'étape de pré-imprégnation, mᵢ étant la masse initiale de la poudre dans ladite cuve (20) au démarrage de la mise en œuvre de l'étape de pré-imprégnation à l'exclusion d'un procédé électrostatique en charge volontaire, le diamètre moyen D50 en volume des particules de poudre de polymère thermoplastique étant compris de 30 à 300 µm.

2. Procédé selon la revendication 1, **caractérisé en ce que** le diamètre moyen D50 en volume des particules de poudre de polymère thermoplastique étant compris de 50 à 200 µm, plus particulièrement de 70 à 200µm

3. Procédé selon l'une des revendications 1 ou 2, **caractérisé en ce que** la cuve (20) est réalimenté par la matrice polymère thermoplastique se présentant sous forme de poudre pour compenser la consommation de ladite matrice polymère thermoplastique par la pré-imprégnation dudit matériau fibreux.

4. Procédé selon l'une des revendications 1 à 3, **caractérisé en ce que** la granulométrie de ladite poudre est sensiblement constante dans ladite cuve (20), c'est-à-dire que la D50 varie au maximum de + 20%

5. Procédé selon l'une des revendications 1 à 4, **caractérisé en ce que** la granulométrie des particules fines, présentant un diamètre compris de 0,01 à 60 µm, de ladite poudre est sensiblement constante dans ladite cuve (20), c'est-à-dire que la D10 varie au maximum de + 30%.

6. Procédé selon la revendication 1 à 5, **caractérisé en ce que** la granulométrie des grosses particules de ladite poudre est sensiblement constante dans ladite cuve (20), c'est-à-dire que la D90 varie au maximum de + 10%.

7. Procédé selon l'une des revendications 1 à 6, **caractérisé en ce que** ladite cuve (20) comprend un lit fluidisé (22) et ladite étape de pré-imprégnation est effectuée avec épanouissement simultané de ladite mèche (81a) ou desdites mèches entre l'entrée et la sortie dudit lit fluidisé (22).

8. Procédé selon l'une des revendications 1 à 7, **caractérisé en ce que** ladite cuve (20) est équipée d'un racloir.

9. Procédé selon la revendication 8, **caractérisé en ce que** ledit racloir est mis en œuvre automatiquement lorsque le niveau h < hᵢ - 3%, en particulier h < hᵢ - 2%.

10. Procédé selon l'une des revendications 1 à 9, **caractérisé en ce que** ladite cuve (20) est équipée d'un système transverse d'aspiration qui aspire les particules fines présentant un diamètre compris de 0,01 à 60 µm qui sortent de ladite cuve (20) lors de la fluidisation.

11. Procédé selon la revendication 10, **caractérisé en ce que** lesdites particules aspirées sont réintroduites en continu dans ladite cuve (20).

12. Procédé selon l'une des revendications 1 à 11, **caractérisé en ce que** ladite cuve (20) est équipée d'un racloir et d'un système transverse d'aspiration qui aspire les particules fines présentant un diamètre compris de 0,01 à 60 µm qui sortent ladite cuve (20).

13. Procédé selon l'une des revendications 1 à 12, **caractérisé en ce que** ledit lit fluidisé (22) comprend au moins une pièce d'embarrage (82), ladite mèche (81a) ou lesdites mèches étant en contact avec une partie ou la totalité de la surface de ladite au moins une pièce d'embarrage (82).

14. Procédé selon l'une des revendications 1 à 13, **caractérisé en ce que** ledit polymère thermoplastique est un polymère thermoplastique non réactif.

15. Procédé selon la revendication 14, **caractérisé en ce qu'**il comprend une étape de chauffage du matériau fibreux pré-imprégné pour fondre le polymère thermoplastique et finaliser l'imprégnation dudit matériau fibreux.

16. Procédé selon l'une des revendications 1 à 13, **caractérisé en ce que** ledit polymère thermoplastique est un prépolymère réactif susceptible de réagir sur lui-même ou avec un autre prépolymère, en fonction des fins de chaîne portées par ledit prépolymère, ou encore avec un allongeur de chaîne.

17. Procédé selon la revendication 16, **caractérisé en ce qu'**il comprend une étape de chauffage du matériau fibreux pré-imprégné pour fondre et polymériser le prépolymère thermoplastique éventuellement avec ledit allongeur et finaliser l'imprégnation dudit matériau fibreux.

18. Utilisation du procédé tel que défini selon l'une des revendications 1 à 17, pour la fabrication de rubans calibrés adaptés à la fabrication de pièces composites en trois dimensions, par dépose automatique desdits rubans au moyen d'un robot.

19. Cuve (20) comprenant un lit fluidisé (22) et un racloir ou un système transverse d'aspiration qui aspire les particules fines, présentant un diamètre compris de 0,01 à 60 µm, pour une utilisation dans un procédé tel que défini dans l'une des revendications 1 à 17.

20. Cuve (20) comprenant un lit fluidisé (22), un racloir et un système transverse d'aspiration qui aspire les particules fines, présentant un diamètre compris de 0,01 à 60 µm, pour une utilisation dans un procédé tel que défini dans l'une des revendications 1 à 17.

## Patentansprüche

1. Verfahren zur Herstellung eines imprägnierten faserigen Materials, das mindestens ein faseriges Material aus Endlosfasern und mindestens eine thermoplastische Polymermatrix umfasst, wobei es weiterhin einen Schritt des Vorimprägnierens des faserigen Materials mit einer thermoplastischen Polymermatrix umfasst, welche in Form eines Pulvers vorliegt, **dadurch gekennzeichnet, dass** der Schritt des Vorimprägnierens auf trockenem Wege in einem Behälter (20) durchgeführt wird, der ein Fließbett (22) umfasst, wobei der Schritt des Vorimprägnierens derart durchgeführt wird, dass der Füllstand h des Pulvers und die Masse m des Pulvers, die in dem Behälter (20) vorliegt, im Wesentlichen konstant bleiben, wobei der Füllstand h während der Durchführung des Schrittes des Vorimprägnierens im Bereich von hi bis hi -3%, insbesondere hi -2%, liegt, wobei hi der anfängliche Füllstand des Pulvers in dem Behälter (20) zu Beginn der Durchführung des Schrittes des Vorimprägnierens ist, wobei die Masse m während der Durchführung des Schrittes des Vorimprägnierens im Bereich von mi bis mi ± 0,5% liegt, wobei mi die anfängliche Masse des Pulvers in dem Behälter (20) zu Beginn der Durchführung des Schrittes des Vorimprägnierens ist,
wobei der volumenbezogene mittlere Durchmesser D50 der Pulverpartikel aus thermoplastischem Polymer, abgesehen von einem elektrostatischen Vorgang mit bewusst herbeigeführter Aufladung, im Bereich von 30 bis 300 µm liegt.

2. Verfahren nach Anspruch 1, **dadurch gekennzeichnet, dass** der volumenbezogene mittlere Durchmesser D50 des Pulverpartikel aus thermoplastischem Polymer im Bereich von 50 bis 200 µm, insbesondere von 70 bis 200 µm liegt.

3. Verfahren nach einem der Ansprüche 1 oder 2, **dadurch gekennzeichnet, dass** die thermoplastische Polymermatrix, welche in Form eines Pulvers vorliegt, dem Behälter (20) erneut zugeführt wird, um den Verbrauch der thermoplastischen Polymermatrix durch das Vorimprägnieren des faserigen Materials auszugleichen.

4. Verfahren nach einem der Ansprüche 1 bis 3, **dadurch gekennzeichnet, dass** die Korngrößenverteilung des Pulvers in dem Behälter (20) im Wesentlichen konstant ist, das heißt, dass D50 um höchstens + 20% variiert.

5. Verfahren nach einem der Ansprüche 1 bis 4, **dadurch gekennzeichnet, dass** die Korngrößenverteilung der Feinpartikel, welche einen Durchmesser im Bereich von 0,01 bis 60 µm aufweisen, des Pulvers in dem Behälter (20) im Wesentlichen konstant ist, das heißt, dass D10 um höchstens + 30% variiert.

6. Verfahren nach einem der Ansprüche 1 bis 5, **dadurch gekennzeichnet, dass** die Korngrößenverteilung der Grobpartikel des Pulvers in dem Behälter (20) im Wesentlichen konstant ist, das heißt, dass D90 um höchstens + 10% variiert.

7. Verfahren nach einem der Ansprüche 1 bis 6, **dadurch gekennzeichnet, dass** der Behälter (20) ein Fließbett (22) umfasst, wobei der Schritt des Vorimprägnierens unter gleichzeitigem Aufspreiten des Rovings (81a) oder der Rovings zwischen der Eintrittsöffnung und der Austrittöffnung des Fließbetts (22) durchgeführt wird.

8. Verfahren nach einem der Ansprüche 1 bis 7, **dadurch gekennzeichnet, dass** der Behälter (20) mit einer Rakel ausgestattet ist.

9. Verfahren nach Anspruch 8, **dadurch gekennzeichnet, dass** die Rakel automatisch zum Einsatz gebracht wird, wenn der Füllstand h < hi - 3%, insbesondere h < hi - 2% ist.

10. Verfahren nach einem der Ansprüche 1 bis 9, **dadurch gekennzeichnet, dass** der Behälter (20) mit einem querwirkenden Saugsystem ausgestattet ist, welches die Feinpartikel mit einem Durchmesser im Bereich von 0,01 bis 60 µm absaugt, wenn diese bei der Fließbettbereitung aus dem Behälter (20) austreten.

11. Verfahren nach Anspruch 10, **dadurch gekennzeichnet, dass** die abgesaugten Partikel kontinuierlich wieder dem Behälter (20) zugeführt werden.

12. Verfahren nach einem der Ansprüche 1 bis 11, **dadurch gekennzeichnet, dass** der Behälter (20) mit einer Rakel und einem querwirkenden Saugsystem ausgestattet ist, welches die Feinpartikel mit einem Durchmesser im Bereich von 0,01 bis 60 µm absaugt, wenn diese aus dem Behälter (20) austreten.

13. Verfahren nach einem der Ansprüche 1 bis 12, **dadurch gekennzeichnet, dass** das Fließbett (22) mindestens ein Streckwerk (82) umfasst, wobei das Roving (81a) oder die Rovings mit einem Abschnitt oder der Gesamtheit der Oberfläche des mindestens einen Streckwerks (82) in Kontakt sind.

14. Verfahren nach einem der Ansprüche 1 bis 13, **dadurch gekennzeichnet, dass** es sich bei dem thermoplastischen Polymer um ein reaktionsunfähiges thermoplastisches Polymer handelt.

15. Verfahren nach Anspruch 14, **dadurch gekennzeichnet, dass** es einen Schritt des Erwärmens des vorimprägnierten faserigen Materials umfasst, um das thermoplastische Polymer zum Schmelzen zu bringen und das Imprägnieren des faserigen Materials zum Abschluss zu bringen.

16. Verfahren nach einem der Ansprüche 1 bis 13, **dadurch gekennzeichnet, dass** es sich bei dem thermoplastischen Material um ein reaktionsfähiges Präpolymer handelt, das in Abhängigkeit von den Kettenenden, mit welchen das Präpolymer versehen ist, mit sich selbst oder mit einem anderen Präpolymer oder auch mit einem Kettenverlängerungsmittel reagieren kann.

17. Verfahren nach Anspruch 16, **dadurch gekennzeichnet, dass** es einen Schritt des Erwärmens des vorimprägnierten faserigen Materials umfasst, um das thermoplastische Präpolymer zum Schmelzen zu bringen und gegebenenfallss mit dem Verlängerungsmittel zu polymerisieren sowie das Imprägnieren des faserigen Materials zum Abschluss zu bringen.

18. Anwendung des Verfahrens nach den Begriffsbestimmungen in einem der Ansprüche 1 bis 17, zur Herstellung von kalibrierten Bändern, die sich zur Fertigung von dreidimensionalen Verbundstoffteilen eignen, indem die Bänder mittels eines Roboters automatisch aufgebracht werden.

19. Behälter (20), der ein Fließbett (22) und eine Rakel oder ein querwirkendes Saugsystem umfasst, welches die Feinpartikel absaugt, deren Durchmesser im Bereich von 0,01 bis 60 µm liegt, für eine Verwendung in einem Verfahren nach den Begriffsbestimmungen in einem der Ansprüche 1 bis 17.

20. Behälter (20), der ein Fließbett (22), eine Rakel und ein querwirkendes Saugsystem umfasst, welches die Feinpartikel absaugt, deren Durchmesser im Bereich von 0,01 bis 60 µm liegt, für eine Verwendung in einem Verfahren nach den Begriffsbestimmungen in einem der Ansprüche 1 bis 17.

## Claims

1. Process for manufacturing an impregnated fibrous material comprising at least one fibrous material made of continuous fibres and at least one thermoplastic polymer matrix, said process comprising a step of pre-impregnating said fibrous material with a thermoplastic polymer matrix in powder form, **characterized in that** said pre-impregnation step is carried out dry in a tank (20) comprising a fluidized bed (22), said pre-impregnation step being carried out while keeping the level h of the powder and the mass m of the powder present in the tank (20) substantially constant, said level h being from hᵢ to hi-3%, in particular hi-2%, during the implementation of the pre-impregnation step, where hᵢ is the initial level of the powder in said tank (20) at the start of the implementation of the pre-impregnation step, said mass m being from mᵢ to mᵢ ± 0.5% during the implementation of the pre-impregnation step, where mᵢ is the initial mass of the powder in said tank (20) at the start of the implementation of the pre-impregnation step,
with the exclusion of any electrostatic process with intentional charging, the volume mean diameter D50 of the thermoplastic polymer powder particles being from 30 to 300 µm.

2. Process according to Claim 1, **characterized in that** the volume mean diameter D50 of the thermoplastic polymer powder particles is from 50 to 200 µm, more particularly from 70 to 200 µm.

3. Process according to either of Claims 1 and 2, **characterized in that** the tank (20) is replenished with the thermoplastic polymer matrix in powder form to compensate for the consumption of said thermoplastic polymer matrix by the pre-impregnation of said fibrous material.

4. Process according to one of Claims 1 to 3, **characterized in that** the particle size of said powder is substantially constant in said tank (20), that is to say that the D50 varies by a maximum of +20%.

5. Process according to one of Claims 1 to 4, **characterized in that** the particle size of the fine particles, having a diameter from 0.01 to 60 µm, of said powder is substantially constant in said tank (20), that is to say that the D10 varies by a maximum of +30%.

6. Process according to Claims 1 to 5, **characterized in that** the particle size of the large particles of said powder is substantially constant in said tank (20), that is to say that the D90 varies by a maximum of +10%.

7. Process according to one of Claims 1 to 6, **characterized in that** said tank (20) comprises a fluidized bed (22) and said pre-impregnation step is carried out with simultaneous fanning out of said roving (81a) or of said rovings between the inlet and the outlet of said fluidized bed (22).

8. Process according to one of Claims 1 to 7, **characterized in that** said tank (20) is equipped with a scraper.

9. Process according to Claim 8, **characterized in that** said scraper is used automatically when the level h < hᵢ-3%, in particular h < hᵢ-2%.

10. Process according to one of said Claims 1 to 9, **characterized in that** said tank (20) is equipped with a transverse suction system which sucks up fine particles having a diameter of 0.01 to 60 µm which leave said tank (20) during the fluidization.

11. Process according to Claim 10, **characterized in that** said suctioned particles are continuously reintroduced into said tank (20).

12. Process according to one of Claims 1 to 11, **characterized in that** said tank (20) is equipped with a scraper and a transverse suction system which sucks up fine particles having a diameter of 0.01 to 60 µm which leave said tank (20).

13. Process according to one of Claims 1 to 12, **characterized in that** said fluidized bed (22) comprises at least one tension device (82), said roving (81a) or said rovings being in contact with a portion or the whole of the surface of said at least one tension device (82).

14. Process according to one of Claims 1 to 13, **characterized in that** said thermoplastic polymer is a non-reactive thermoplastic polymer.

15. Process according to Claim 14, **characterized in that** it comprises a step of heating the pre-impregnated fibrous material to melt the thermoplastic polymer and to finalize the impregnation of said fibrous material.

16. Process according to one of Claims 1 to 13, **characterized in that** said thermoplastic polymer is a reactive prepolymer capable of reacting on itself or with another prepolymer, depending on the chain ends borne by said prepolymer, or else with a chain extender.

17. Process according to Claim 16, **characterized in that** it comprises a step of heating the pre-impregnated fibrous material to melt and polymerize the thermoplastic prepolymer optionally with said extender and to finalize the impregnation of said fibrous material.

18. Use of the process as defined according to one of Claims 1 to 17, for the manufacture of calibrated ribbons suitable for the manufacture of three-dimensional composite parts, by automated layup of said ribbons using a robot.

19. Tank (20) comprising a fluidized bed (22) and a scraper or a transverse suction system which sucks up fine particles, having a diameter from 0.01 to 60 µm, for use in a process as defined in one of Claims 1 to 17.

20. Tank (20) comprising a fluidized bed (22), a scraper and a transverse suction system which sucks up fine particles, having a diameter from 0.01 to 60 µm, for use in a process as defined in one of Claims 1 to 17.
